# EUROPÄISCHE PATENTSCHRIFT

(11) **EP 0 646 612 B1**
(45) Veröffentlichungstag und Bekanntmachung des Hinweises auf die Patenterteilung: **14.04.1999**
(21) Anmeldenummer: 94115098.9
(22) Anmeldetag: 24.09.1994
(51) Int. Cl.: C08G 63/83, C08G 63/80

(54) **Verfahren zur Herstellung von thermoplastischen Polyestern**
Process for the manufacture of thermoplastic polyesters
Procédé de préparation de polyesters thermoplastiques

(30) Priorität: 05.10.1993 DE 4333930
(43) Veröffentlichungstag der Anmeldung: 05.04.1995
(73) Patentinhaber: BASF Aktiengesellschaft, 67063 Ludwigshafen (DE)
(72) Erfinder: Braune, Peter, Dr., D-55234 Erbes-Büdesheim (DE)

(56) Entgegenhaltungen:
- EP-A- 0 215 364
- AT-B- 290 132
- US-A- 4 654 413
- PATENT ABSTRACTS OF JAPAN, unexamined applications, C Sektion, Band 3, Nr. 128, 24. Oktober 1979 THE PATENT OFFICE JAPANESE GOVERNMENT Seite 139 C 62; & JP-A-54 108 898 (NIPPON ESTER)

## Beschreibung

Die vorliegende Erfindung betrifft ein Verfahren zur Herstellung von thermoplastischen Polyestern durch mehrstufige Polykondensation von Dihydroxyverbindungen und Dicarbonsäuren oder deren Estern bzw. esterbildenden Derivaten.

Verfahren der vorstehend genannten Art werden insbesondere zur Herstellung von Polyalkylenterephthalaten weltweit in großem Umfang technisch durchgeführt.

Zur Erhöhung des Molekulargewichts wird häufig in mindestens einer zweiten Stufe der Umsetzung eine Festphasennachkondensation durchgeführt.

Hinsichtlich der dafür erforderlichen langen Verweilzeit und der damit einhergehenden thermischen Belastung der Polyester, die zu einer unerwünschten Stippen- und Gelbildung führt, besteht der Wunsch nach Verbesserungen.

Die Mitverwendung von Alkalimetallverbindungen bei der Polykondensation zur Erhöhung des kristallinen Anteils bzw. der Kristallisationsgeschwindigkeit der Polyester ist an sich bekannt und z.B. in der EP-A 215 364 und der EP-A 29 285 beschrieben. Die Mengen an zugesetzter Alkalimetallverbindung betragen dabei gemäß EP-A 29 285 etwa 0,1 bis 2 Gew.-%, bezogen auf Polyester bzw. 0,02 bis 1 mol pro kg an Polyester (EP-215 364). Derartig relativ hohe Mengen sind jedoch im Endprodukt ebenfalls für manche Anwendungen nachteilig.

Der vorliegenden Erfindung lag daher die Aufgabe zugrunde, ein Verfahren zu Herstellung von Polyestern der eingangs erwähnten Art zur Verfügung zu stellen, welches ein weitgehend stippen- und gelfreies Produkt liefert und insgesamt eine kürzere Polykondensationszeit erfordert.

Diese Aufgabe wurde erfindungsgemäß dadurch gelöst, daß bei einem Verfahren zur Herstellung von thermoplastischen Polyestern durch mehrstufige Polykondensation von Dihydroxyverbindungen mit Dicarbonsäuren oder deren Estern bzw. deren esterbildenden Derivaten in mindestens einer ersten Stufe ein Alkalimetallalkoholat oder ein Erdalkalimetallalkoholat in einer Menge von 1 bis 10 mmol pro kg Polyester, berechnet als Alkalimetall bzw. Erdalkalimetall zugegeben und mindestens eine weitere Stufe als Festphasenkondensation durchgeführt wird.

Nach dem erfindungsgemäßen Verfahren sind bei kürzerer Polykondensationszeit insbesondere der Festphasenkondensation Polyester mit hohem Molekulargewicht und weitgehender Stippen- und Gelfreiheit zugänglich.

Als Dihydroxyverbindungen können aliphatische, aromatische oder cycloaliphatische Diole eingesetzt werden.

Vorteilhaft weisen diese 2 bis 20, insbesondere 2 bis 12 C-Atome auf, besonders bevorzugt werden aliphatische Diole mit 2 bis 12 C-Atomen, insbesondere mit 2 bis 6 C-Atomen.

Beispielhaft seien hier Ethandiol (Ethylenglykol), 1,3-Propandiol, 1,4-Butandiol, Cyclohexandiole, Hydrochinon, Resorcin und Bisphenol A genannt, wovon Ethandiol und 1,6-Butandiol besonders bevorzugt sind.

Als Dicarbonsäuren können aliphatische und/oder aromatische Dicarbonsäuren mit vorzugsweise 4 bis 20, insbesondere 4 bis 12 C-Atomen eingesetzt werden.

Beispielhaft seien genannt Isophthalsäure, Phthalsäure, Terephthalsäure, alkylsubstituierte Derivate der vorstehend genannten Säuren, Naphthalindicarbonsäuren (2,6 und 2,7), aliphatische Dicarbonsäuren wie Bernsteinsäure, Adipinsäure, Sebacinsäure, Azelainsäure und Decandicarbonsäure, wovon Iso- und Terephthalsäure oder deren Mischungen besonders bevorzugt werden.

Aus dem Vorstehenden ergibt sich, daß nach dem erfindungsgemäßen Verfahren besonders vorteilhaft Polyalkylenterephthalate bzw. Polyalkylenisophthalate oder Copolyester mit Tere- und Isophthalsäure als Säurekomponente hergestellt werden können.

Zusätzlich zu den vorstehend genannten Komponenten können die erfindungsgemäß hergestellten Polyester auch noch geringere Mengen, vorteilhaft weniger als 10 Mol-%, bezogen auf die jeweilige Monomerkomponente, an weiteren Einheiten enthalten, die sich beispielsweise von Hydroxycarbonsäuren ableiten.

Nach dem erfindungsgemäßen Verfahren wird in einer ersten Stufe bei der Umsetzung der Ausgangsmonomere in an sich bekannter Weise 1 bis 10 mmol, vorzugsweise 2 bis 7 mmol und insbesondere 2,5 bis 5 mmol, pro kg Polyester, eines Alkalimetallalkoholats oder Erdalkalimetallalkoholats (berechnet als Alkalimetall bzw. Erdalkalimetall) zugesetzt.

Grundsätzlich eignen Alkoholate der Alkalimetalle, vorzugsweise von Li, Na, K, besonders bevorzugt Na-Alkoholate.

Beispiele besonders bevorzugter Vertreter sind Natriummethanolat, Natriumethanolat, Natriumglykolat. Ganz besonders bevorzugt ist Natriummethanolat, welches besonders vorteilhaft in einer Menge von 2,5 bis 5 mmol, berechnet als Na eingesetzt wird. Es können auch Gemische verschiedener (Erd-)Alkalimetall-Verbindungen eingesetzt werden.

Das (Erd-)Alkalimetall oder das (Erd-)Alkalimetallalkoholat werden zu einem beliebigen Zeitpunkt einer ersten Stufe der Synthese des Polyesters zugegeben, die im allgemeinen nach dem Veresterungs-/Polykondensationsverfahren, vorzugsweise jedoch nach dem Umesterungs-/Polykondensationsverfahren erfolgt. Besonders bevorzugt ist die Zugabe zu Beginn der Umesterung bei Anwendung des Umesterungs-/Polykondensationsverfahrens. Das Veresterungs-/Polykondensationsverfahren bzw. das Umesterungs-/Polykondensationsverfahren sind wohlbekannt und beispielsweise beschrieben in Ullmann's Encyklopädie der technischen Chemie (4. Auf.) 19, S. 61 bis 88 (1980).

### Beispiel

Bei der Herstellung eines Polyesters aus Dimethylterephthalat und Butandiol-1,4 nach dem Umesterungs-/Polykondensationsverfahren wurden bereits bei der Umesterung 4 mmol Na in Form von Natriummethanolat (bezogen auf kg Polyester, der bei vollständiger stöchiometrischer Umsetzung entsteht) zugesetzt und das Produkt nach einer ersten Kondensation in der Schmelze bzw. Lösung einer Festphasenkondensation in einer zweiten Stufe unterworfen.

Dabei war im Vergleich zu einer ohne Na-Methanolat unter sonst gleichen Bedingungen durchgeführten Umsetzung ein deutlich schnellerer Molekulargewichtsaufbau zu beobachten und das erhaltene Produkt wies einen deutlich geringeren Stippen- und Gelanteil auf.

## Patentansprüche

1. Verfahren zur Herstellung von thermoplastischen Polyestern durch mehrstufige Polykondensation von Dihydroxyverbindungen mit Dicarbonsäuren oder deren Estern bzw. esterbildenden Derivaten, dadurch gekennzeichnet, daß in mindestens einer ersten Stufe ein (Erd)alkalialkoholat in einer Menge von 1 bis 10 mmol pro kg Polyester, berechnet als Alkalimetall bzw. Erdalkalimetall, zugegeben und mindestens eine weitere Stufe als Festphasenkondensation durchgeführt wird.

2. Verfahren nach Anspruch 1, dadurch gekennzeichnet, daß Natriummethanolat eingesetzt wird.

## Claims

1. A process for the preparation of a thermoplastic polyester by multistage polycondensation of dihydroxy compounds with dicarboxylic acids or esters or ester-forming derivatives thereof, wherein, in at least one first stage, an alkali metal alcoholate or alkaline earth metal alcoholate is added in an amount of from 1 to 10 mmol, calculated as alkali metal or alkaline earth metal, per kg of polyester, and at least one further stage is carried out as a solid-phase condensation.

2. A process as claimed in claim 1, wherein sodium methanolate is used.

## Revendications

1. Procédé de préparation de polyesters thermoplastiques par polycondensation en plusieurs étapes de composés dihydroxy avec des acides dicarboxyliques ou leurs esters, ou respectivement des dérivés générateurs d'esters, caractérisé en que, dans au moins une première étape, un alcoolate de métal alcalin (alcalino-terreux) est ajouté en une quantité de 1 à 10 mmoles par kg de polyester, en étant calculé sous la forme de métal alcalin ou de métal alcalino-terreux, et en ce qu'au moins une autre étape est effectuée sous la forme d'une condensation en phase solide.

2. Procédé suivant la revendication 1, caractérisé en ce qu'on met en oeuvre du méthanolate de sodium.
